# EUROPÄISCHE PATENTSCHRIFT

(11) **EP 2 718 906 B1**
(45) Veröffentlichungstag und Bekanntmachung des Hinweises auf die Patenterteilung: **09.09.2015**
(21) Anmeldenummer: 12740040.6
(22) Anmeldetag: 30.05.2012
(51) Int. Cl.: A63K 3/00, A63B 21/062, G01B 7/00, G07C 1/22, A63B 22/06, A63B 71/06, H01F 7/02, G07C 1/24

(54) **SYSTEM ZUR ERFASSUNG DER POSITION EINES GEGENSTANDES**
SYSTEM FOR CAPTURING THE POSITION OF AN OBJECT
SYSTÈME DE DÉTECTION DE LA POSITION D'UN OBJET

(30) Priorität: 08.06.2011 DE 102011050926
(43) Veröffentlichungstag der Anmeldung: 16.04.2014
(73) Patentinhaber: Humotion GmbH, 48149 Münster (DE)
(72) Erfinder: ROSENMÖLLER, Johannes, 48157 Münster (DE); LÖSCHINGER, Jürgen, 72072 Tübingen (DE); FEICHTINGER, Richard, 72072 Tübingen (DE)
(74) Vertreter: Habbel, Ludwig
(86) Internationale Anmeldenummer: PCT/DE2012/100160
(87) Internationale Veröffentlichungsnummer: WO 2012/167779

(56) Entgegenhaltungen:
- EP-A2- 1 376 273
- WO-A1-2008/121856
- DE-U1- 29 924 729
- DE-U1-202005 006 251
- GB-A- 2 117 937
- US-A- 2 832 922

## Beschreibung

Die Erfindung betrifft ein System nach dem Oberbegriff des Anspruchs 1.

Gattungsgemäße Systeme zur Erfassung der Position eines Gegenstandes sind beispielsweise durch so genannte RFID-Systeme bekannt. Dabei ist ortsfest ein Sensor vorgesehen, der mit einer Energieversorgung ausgestattet ist und durch Aussendung elektromagnetischer Wellen den Marker seinerseits zur Aussendung von elektromagnetischen Wellen anregt, wobei der Marker dabei seine individuelle Kodierung aussendet. Der Sensor weist außer dem Sendeteil auch ein Empfangsteil auf, mit welchem die vom Marker ausgesendeten Informationen empfangen werden können. Ein derartiges System findet beispielsweise als so genannte Wegfahrsperre im Bereich der Automobiltechnik Anwendung. Der Sensor stellt dabei die als ortsfest bezeichnete Komponente dar, ist also im Fahrzeug angeordnet, und der Marker befindet sich als demgegenüber bewegliche Komponente in dem Fahrzeugschlüssel, den der Benutzer des Fahrzeugs mit sich führt. In ähnlicher Weise sind Zugangsberechtigungen für Türschlösser bei Gebäuden ausgestaltet, in welchen Fällen der Sensor tatsächlich als ortsfest angesehen werden kann.

Der Erfassungsbereich, in welchen der Marker gebracht werden muss, um die Auslösung eines Sensorsignals beim Sensor zu bewirken, liegt im so genannten Nahfeldbereich, also im Bereich von wenigen Millimetern oder Zentimetern.

Das Gleiche gilt für die Ausgestaltung von Systemen zur Positionserkennung, wie sie vielfach in der Industrie angewendet werden und bei denen Magnete als Marker genutzt werden. Die Magnete sind an Gegenständen befestigt, und sobald der Gegenstand mit dem Magneten in den Erfassungsbereich eines Magnetsensors gelangt, beispielsweise in den Erfassungsbereich eines Reedschalters, Hallsensors o. dgl., wird ein entsprechendes Sensorsignal durch den Magnetsensor erzeugt, so dass beispielsweise nachgeschaltete elektrische Einrichtungen einoder ausgeschaltet werden können. Auch bei diesen Anwendungen der Kombination aus Magnet-Marker und Magnetsensor ist der Erfassungsbereich auf einen Nahfeldbereich von wenigen Millimetern oder Zentimetern begrenzt, so dass dementsprechend für eine zuverlässige Erfassung die beiden Komponenten Marker und Sensor sehr exakt zueinander positioniert werden müssen und daher üblicherweise eine Justage der beiden Elemente erforderlich ist.

Die Erfassung der Position eines Gegenstandes ist jedoch nicht nur bei industriellen Anwendungen von Bedeutung, sondern beispielsweise auch bei sportlichen Ereignissen. Beispielsweise kann so die Leistungsfähigkeit von Sportlern beurteilt werden oder bei Wettbewerben eine klare Aussage über die Rangfolge der Sportler getroffen werden. Soll beispielsweise der Zieldurchgang bei Lauf-Wettbewerben automatisch erfasst werden, so kann dies in der Praxis nicht durch eine sensorische Erfassung erfolgen, die auf einen Nahbereich beschränkt ist.

Daher sind aus der Praxis Lichtschranken bekannt, bei denen die Sensoren ortsfest verbaut werden und mit einer Energiezufuhr versehen sind. Als Marker kommt dabei jeder beliebige Gegenstand in Frage, der den vom Sensor ausgesendeten und erfassten Lichtstrahl zu unterbrechen in der Lage ist. Dies können die Sportler selbst sein, wobei allerdings das Problem besteht, dass bei sehr nah beieinander laufenden Sportlern, die gleichzeitig durch die Ziel-Lichtschranke laufen, nicht ohne zusätzliche Auswertungsmöglichkeiten erfasst werden kann, welcher dieser Sportler die Lichtschranke als Erster unterbrochen hat. Es sind daher üblicherweise noch zusätzliche optische Auswertungen erforderlich, um mit der gebotenen Zuverlässigkeit eine Aussage darüber treffen zu können, in welcher Reihenfolge die Sportler in das Ziel eingelaufen sind.

Insbesondere bei Lichtschranken-Systemen, die nicht permanent installiert sind, sondern nur temporär aufgebaut werden, kann sich das Problem ergeben, den Sender und den Empfänger der Lichtschranke ausreichend stabil zu montieren, denn durch Bodenvibrationen, Wind oder dergleichen erzeugte Schwankungen des einen oder anderen dieser beiden Bauteile können bewirken, dass der Lichtstrahl nicht auf den Empfänger trifft, so dass möglicherweise die vermeintliche Anwesenheit eines Markers angezeigt wird, obwohl tatsächlich kein Marker die durch den Lichtstrahl symbolisierte Ziellinie unterbrochen hat. Diese Gefahr von Schwankungen der Lichtschranken-Bauteile besteht insbesondere dann, wenn sich die Sportler der Lichtschranke nähern und durch die Bodenvibrationen derartige Schwankungen auslösen können.

Bei permanent installierten Lichtschranken hingegen ist nachteilig, dass diese eine permanent installierte Stromversorgung für den Sensor erfordern, was beispielsweise die Verlegung eines Stromkabels und Datenkabels zur Lichtschranke erforderlich macht.

Aus der EP 1 376 273 A2 ist ein System zur Zeiterfassung bekannt, welches gattungsgemäß ausgestaltet ist und ortsfest installierte magnetische Marker vorsieht sowie bewegliche Sensoren. Um den Einsatz des Systems im Sport zu ermöglichen, wobei beispielsweise ein Läufer oder Skifahrer den Sensor trägt und an dem Marker in einer Entfernung von mehreren Dezimetern vorbei läuft, muss eine ausreichend große Reichweite der magnetischen Marker sichergestellt sein. Um diese zu erzielen, besteht der Marker aus einer Vielzahl einzelner Magnete, die gleichsinnig ausgerichtet und parallel zueinander angeordnet sind, um so die ausreichend große magnetische Feldstärke zu bewirken.

Aus der US 6 917 565 B2 ist ein gattungsgemäßes System zur Erfassung der Position eines Gegenstandes bekannt, welches ortsfest installierte magnetische Marker vorsieht sowie bewegliche Sensoren, und welches ebenfalls für den Einsatz im Sport vorgesehen ist, so dass das Gleiche gilt wie für die oben genannte EP 1 376 273 A2.

Aus der DE 299 24 729 U1 sind magnetisch verankerbare Aufbausysteme bekannt. Zur so genannten Verankerung benachbarter Module, also zur Herstellung einer belastbaren Verbindung dieser Module, sind Module eines Typs 1 vorgesehen, die ein als magnetisches Joch bezeichnetes Mittelstück aufweisen, und an zwei gegenüberliegenden Enden des Jochs jeweils einen Magneten, wobei die beiden Magnete gleichsinnig und in Reihe angeordnet sind. Das Joch umfasst die beiden Magnete in der Art, dass ganz bewusst der Effekt erreicht wird, den magnetischen Fluss wenigstens teilweise kurzzuschließen. Durch diese starke Bündelung der Magnetfeldlinien wird eine starke magnetische Haltekraft ermöglicht, die im so genannten Nahfeld bzw. Nahbereich wirksam ist. und es ermöglicht, zwei gleiche Module des Typs 1 oder ein Modul des Typs 1 sowie ein anderes, ferromagnetisches Modul, welches als Typ 2 bezeichnet wird, miteinander zu verankern, wenn die beiden Module unmittelbar aneinander anliegen bzw. sich berühren.

Der Erfindung liegt die Aufgabe zugrunde, ein gattungsgemäßes System dahingehend zu verbessern, dass es an beliebigen Orten kurzfristig und auch kurzzeitig aufgestellt werden kann, ohne eine Energieversorgung oder eine Datenverbindung zu den ortsfest installierten Komponenten zu erfordern, und dass es die Erfassung von mehreren Gegenständen gleichzeitig ermöglicht.

Diese Aufgabe wird durch ein System mit den Merkmalen des Anspruchs 1 gelöst.

Die Erfindung schlägt mit anderen Worten erstens vor, den Marker als magnetischen Dipol auszugestalten, wobei der zugehörige Sensor als Magnetsensor ausgestaltet ist. Dies ermöglicht eine wirtschaftliche Ausgestaltung des Systems, da einerseits sowohl die Magnete, als auch andererseits die Magnetsensoren handelsüblich und preisgünstig sind. Beispielsweise können Magnetsensoren verwendet werden, wie sie in vielen Anwendungen mit Kompassfunktion angewendet werden, wobei die Magnetsensoren in diesen Anwendungen das Erdmagnetfeld erfassen.

Das magnetische Feld hängt von der Dipollänge ab, und mit der dritten Potenz des Abstandes zum Dipol nimmt die magnetische Feldstärke ab. Vorschlagsgemäß ist daher eine Vergrößerung des Erfassungsbereichs dadurch vorgesehen, dass die Dipollänge des Magneten verlängert wird. Im Bereich magnetischer Marker kann ein so genannter Nahbereich beispielsweise als eine Entfernung definiert werden, die eine Größenordnung von ungefähr der Dipollänge aufweist. Der Erfassungsbereich wird vorschlagsgemäß vom Nahbereich zu einem so genannten Weitbereich vergrößert, der mindestens das Zweifache, bevorzugt das Vierfache, bis hin zum Zehnfachen oder mehr der Dipollänge beträgt, indem der Marker ein als Verlängerungsjoch bezeichnetes Joch zur Verlängerung und Fokussierung der magnetischen Feldlinien aufweist, welches aus einem ferromagnetischen Material mit hoher magnetischer Permeabilität (µr) besteht und mehrere Zentimeter lang ist. An den beiden Enden dieses Verlängerungsjochs ist jeweils wenigstens ein Magnet angeordnet, derart, dass ein verlängerter magnetischer Gesamt-Dipol entsteht, dessen Länge aus der Summe der Einzelmagneten und des Verlängerungsjochs besteht. Im folgenden wird diese Anordnung als Magnetischer Compound Dipol (MCD) bezeichnet. Damit lässt sich ein Weitbereich im Dezimeter- bis Meter- Bereich abdecken.

Die Magnete sind also nicht parallel zueinander angeordnet, sondern in Reihe ausgerichtet, so dass ihre magnetischen Nord-Süd-Achsen in Längsrichtung des Verlängerungsjochs verlaufen und die beiden Magnete das Verlängerungsjoch verlängern. Dabei sind die beiden Magnete gleichsinnig ausgerichtet. Wenn beispielsweise der Dipol als aufrecht ausgerichteter Stab ausgestaltet ist, sind die Nordpole beider Magnete nach oben oder beide nach unten weisend ausgerichtet, die beiden Magnete also gleichsinnig ausgerichtet. Im Extremfall kann das Verlängerungsjoch selbst aus einer Reihe von gleichsinnig ausgerichteten und in Längsrichtung angeordneten Einzelmagneten bestehen, in der Praxis ist es jedoch ökonomischer, das Verlängerungsjoch aus einem weichen Eisenstab zu gestalten und an den beiden Enden in Längsrichtung jeweils 1, 2 oder 3 Einzelmagnete in genannter gleichsinniger Anordnung anzudocken.

In einer Ausführung besteht der MCD aus 2 Permanentmagneten mit 2,0 cm Durchmesser und 1 cm Dicke, die durch einen Eisenstab mit niedrigen Kohlenstoffanteil von gleichem Durchmesser und einer Länge von 25 cm, 50 cm, 1 m oder mehr beabstandet sind. Statt kreisrund können die Querschnitte der Magnete und des Eisenstabs auch eckig oder anders geformt sein. Die Enden des Eisenstabes sind plan abgeschliffen, so dass sich eine gute flächige Verbindung zu den Magneten ergibt.

Um zu verhindern, dass der Nahbereich des MCD mit seinem starken magnetischen Feld unerwünschte Einflüsse auf Gegenstände oder Personen haben kann, wird dieser nicht zugänglich gestaltet. Dazu wird der MCD in ein anderes Material eingeschlossen oder eingegossen. In einer Ausführung wird er durch ein Kunststoff-Schaumteil umgeben. Das von außen zugängliche Feld hat dabei eine Stärke dergestalt, dass sich eine darunter liegende Büroklammer nicht von selbst gegen die Schwerkraft auf den MCD zu bewegt. Die zugänglichen magnetischen Feldstärken liegen dabei in der gleichen Größenordnung wie die von kleinen Lautsprechern, z. B. in Mobiltelefonen.

Durch die Dipolverlängerung kann kostengünstig eine erhebliche Vergrößerung des magnetischen Weitbereichs erreicht werden, so dass der Erfassungsbereich so groß wird, dass er beispielsweise für die Anwendung bei Sportveranstaltungen oder für die Überwachung der Bewegungen von Tieren genutzt werden kann, wenn beispielsweise entsprechende Tore oder Schranken geschaffen werden, durch die der zu detektierende Gegenstand bewegt werden muss und wobei dieses Tor bzw. diese Schranke vollständig innerhalb des Erfassungsbereichs liegt.

Vorteilhaft kann der erwähnte Eisenstab an beiden Enden mit jeweils einem Magnet versehen sein, wobei diese Magnete so angebracht sind, dass sich ein magnetischer Gesamt-Dipol (MCD) ergibt. Eine Länge des Eisenstabes von 25 cm ergibt ein in der Praxis gut nutzbares, großes Magnetfeld, welches von den handelsüblichen Magnetsensoren problemlos erfasst werden kann, so dass das entsprechende Erfassungssignal vom Sensor bzw. der zugeordneten Elektronik zuverlässig erzeugt wird.

Als ein typischer, allerdings rein beispielhaft herangezogener Anwendungsfall wird nachfolgend wiederholt die Verwendung des Systems zur Erfassung des Zieleinlaufs bei einem Laufwettbewerb beschrieben. Allerdings können die Sensoren auch an Tieren - z. B. an Rennpferden - oder an unbelebten Gegenständen angeordnet sein, beispielsweise im Rahmen der sportlichen Zeiterfassung an Fahrzeugen oder an Gegenständen, welche die Sportler tragen oder werfen, oder an Wagen, die von Tieren gezogen werden o. dgl. Und außerhalb der sportlichen Zeiterfassung kann das System auch für ganz andere Anwendungsfälle verwendet werden, wie noch erläutert werden wird.

Das vorschlagsgemäße System ermöglicht in einer vorteilhaften Ausgestaltung, dass mehrere Sensoren vorgesehen sind, die jeweils an einem anderen Gegenstand angeordnet sind, dass also beispielsweise bei einer Gruppe von Läufern jeder Läufer einen eigenen Sensor trägt.

Vorschlagsgemäß ist zweitens vorgesehen, dass die elektronische Schaltung des Sensors eine Zeitbasis aufweist und dass der Zeitpunkt des Erfassungssignals automatisch abgespeichert wird. Wenn einer Gruppe von Sportlern jedem Sportler ein eigener Sensor zugeordnet ist und wenn diese Gruppe an einem Marker vorbeiläuft, registriert jeder Sensor eines jeden Sportlers die Nähe des Markers, so dass der Sensor das Erfassungssignal erzeugt. Dadurch, dass dieses Erfassungssignal zu einem ganz bestimmten Zeitpunkt erzeugt, zugeordnet, ausgewertet und anschließend abgespeichert wird, kann später eine Auswertung sämtlicher Sensoren erfolgen und anhand der Sensorauswertung präzise ermittelt werden, wann welcher Sportler an dem bestimmten Marker gewesen ist.

In einer Ausführung können die erfassten Zeitpunkte des Sensors auch drahtlos übermittelt und unmittelbar an einer Anzeigetafel dargestellt oder anderweitig benutzt werden.

Die quarzgesteuerten Zeitbasen handelsüblicher Sensoren weisen eine Ganggenauigkeit auf, die im hier interessierenden Zeitraum von wenigen Minuten (z. B. 100-m-Lauf) oder wenigen Stunden (z. B. bei Marathonläufen oder Motorsportveranstaltungen) keine nennenswerte Gangabweichung von der tatsächlichen Zeit aufweisen, so dass dementsprechend die Sensorauswertungen mit der erforderlichen Präzision die Auswertungsergebnisse erbringen.

Dabei ist zunächst unerheblich, ob die Zeitbasen mehrerer Sensoren unterschiedliche absolute Zeiten anzeigen, also Abweichungen von der tatsächlichen Ortszeit, denn zum Auswertungszeitpunkt können diese unterschiedlichen absoluten Zeiten miteinander verglichen und durch entsprechende Korrekturfaktoren herausgerechnet werden, so dass dann vergleichbare relative Zeiten vorliegen, die beispielsweise vom Start bis zum Zieleinlauf berechnet werden können. Alternativ zu der Anwendung derartiger Korrekturwerte kann vorgesehen sein, die Zeitbasen der Sensoren vor dem Beginn des Sportereignisses in Art eines "Reset" auf einen gemeinsamen Wert einzustellen, beispielsweise auf die tatsächliche Ortszeit oder einfach auf einen Nullwert, so dass von da an ohnehin sämtliche in den Sensoren erfassten Ereignisse zeitlich unmittelbar miteinander vergleichbar sind.

Vorteilhaft kann vorgesehen sein, dass nicht nur ein Marker in dem System angeordnet ist, um beispielsweise einen Zieldurchgang erfassen zu können, sondern dass mehrere Marker vorgesehen sind, wobei diese Marker so weit voneinander beabstandet angeordnet sind, dass ihre Erfassungsbereiche einander nicht überschneiden, wobei die Größe des jeweiligen Erfassungsbereichs von der Empfindlichkeit des zum selben System gehörigen Sensors mitbestimmt ist.

Bezogen auf Sportereignisse können die voneinander beabstandeten Marker beispielsweise entlang einer von den Sportlern zurückzulegenden Wegstrecke installiert werden, so dass zwischen dem Start und dem Zieleinlauf Zwischenzeiten erfasst werden können. Beispielsweise können beim Hürdenlauf Marker in den einzelnen Hürden angeordnet sein. Zu Trainingszwecken kann das Leistungsvermögen eines Sportlers mittels der Zwischenzeiten analysiert werden, beispielsweise um auf bestimmten Streckenabschnitten einen unerwünschten Leistungsabfall zu ermitteln.

Bezogen auf einen anderen Anwendungsfall als eine Zeiterfassung im Sport kann durch voneinander beabstandete und insofern separate Marker beispielsweise innerhalb eines vorbestimmten Gebietes erfasst werden, wie viele zu erfassende Gegenstände wann und an welcher Stelle Durchgänge ausgeführt haben. So können beispielsweise Pferde in Stallungen mit den Sensoren versehen sein, und anhand von mehreren verteilt angeordneten Magnetschranken kann erfasst werden, in welchem abgegrenzten Raum sich das Pferd aufhält.

An Stelle der Durchgänge kann auch vorgesehen sein, mehrere Marker so anzuordnen, dass sich ihre Erfassungsbereiche überschneiden. Auf diese Weise kann beispielsweise ein vorgegebenes Gebiet mit unsichtbaren Zäunen eingegrenzt werden. Für diese Anordnung sind die MCDs auf einer Linie angeordnet. Bei Annäherung eines Pferdes an einen der MCDs kann ein Signal zur Verhaltensänderung erzeugt werden, das ein Überschreiten der unsichtbaren Grenze verhindert.

In einer anderen Ausführung kann eine Richtwirkung des MCDs dadurch erreicht werden, dass der magnetische Feldlinienverlauf im Weitfeld inhomogen gestaltet wird. Dies kann durch verschiedenen Anordnungen, Formen und Abmessungen der Magneten und / oder der Abstandsjoche erreicht werden. Dadurch kann das Magnetfeld an die jeweils vorgesehene Anwendung angepasst werden.

Auch bezogen auf Sportereignisse kann ein inhomogenes Weitfeld vorteilhaft sein, beispielsweise um in Art einer Schranke einen sehr schmalen, nahezu linienförmigen Erfassungsbereich zu schaffen bzw. einen Erfassungsbereich, der wie eine Wandfläche aufrecht ausgerichtet ist und sehr flach ist, so dass ein Durchgang durch eine Ziellinie - nämlich durch diesen Erfassungsbereich - zeitlich sehr präzise bestimmt werden kann.

Vorteilhaft können die Marker jeweils eine individuelle Kennung aufweisen, so dass bei Anordnung mehrerer Marker die Position des zu detektierenden Gegenstandes präzise erfasst werden kann, weil der an diesem Gegenstand vorgesehene Sensor und seine zugeordnete elektronische Schaltung ein für den jeweiligen Marker typisches Erfassungssignal erzeugt. Bei dem oben erwähnten Beispiel des Hürdenlaufs ist es nicht erforderlich, dass die einzelnen Marker unterschiedliche Kennungen aufweisen, da allein aufgrund des vorgegebenen Bahnverlaufs jedes einzelne Erfassungssignal klar einem bestimmten Marker zugeordnet werden kann, selbst wenn sämtliche Erfassungssignale gleich sind. Für die Erfassung eines Gegenstandes innerhalb eines bestimmten Bereichs hingegen, und wenn dieser Gegenstand entlang eines nicht vorbestimmten Bahnverlaufs bewegt wird wie bei der oben erwähnten Erfassung von Tieren innerhalb eines Stalls, kann die unterschiedliche Kennung der einzelnen Marker dazu dienen, die Zuordnung des Gegenstandes innerhalb des Bereichs eindeutig vorzunehmen.

Die erwähnte Schranke bzw. das erwähnte Tor, welches vorteilhaft genutzt werden kann, kann eine Markeranordnung aufweisen, bei welcher wenigstens zwei Magnetische Compound Dipole im Abstand von wenigstens mehreren Dezimetern, ggf. von ein bis zwei Metern angeordnet sind, so dass diese beiden magnetischen Dipole eine unsichtbare Schranke oder ein unsichtbares Tor bilden, welches zuverlässig zu der Erzeugung eines Erfassungssignals führt, wenn der betreffende Sensor durch dieses Tor bzw. durch diese Schranke bewegt wird.

Vorteilhaft kann der Sensor in einem Leibgurt angeordnet sein, der von einem Lebewesen getragen werden kann, bei einem Menschen beispielsweise in Form eines Hüftgurtes. Dadurch, dass der Leibgurt am Rumpf des Lebewesens getragen wird, können Verfälschungen der Messergebnisse beispielsweise bei einem Zieleinlauf vermieden werden, die ansonsten beispielsweise dadurch hervorgerufen werden könnten, dass der Sensor an einer Extremität des Lebewesens befestigt wird und durch Ausstrecken dieser Extremität der Sensor zu einem besonders frühen Zeitpunkt in die Ziellinie gebracht wird.

Da Magnetfelder um einen magnetischen Dipol herum annähernd ellipsenförmig sind und damit nicht sehr richtungsspezifisch sind, ist eine Unterscheidung, aus welchem Winkel sich der Sensor an den Marker annähert, schwierig. Eine Abstandmessung hingegen ist mit guter Genauigkeit möglich.

Als Verlängerungsjoch kann statt der bereits erwähnten geraden Stange auch ein anders geformter Stab bzw. ein anderer Gegenstand benutzt werden. Durch die Wahl der geometrischen Form kann das magnetische Feld zusätzlich beeinflusst werden, so dass dadurch eine bewusste Richtwirkung für die Schaltcharakteristik verbessert werden kann, die zum Auslösen des Sensorsignals führt.

Zur Schaffung der erwähnten unsichtbaren Schranke werden mindestens zwei Magnetische Compound Dipole ("MCD") benutzt, die beispielsweise in einer praxisgerechten Ausgestaltung des Systems in einem Abstand von etwa ein bis zwei Metern voneinander aufgestellt werden. Die MCDs stehen dabei senkrecht zum Boden, also beispielsweise in Ausrichtung einer Z-Achse eines Koordinatensystems, bei welchem die X- und Y-Achsen bodenparallel und zueinander senkrecht verlaufen. Die Orientierung der MCDs kann dabei wahlweise gleichpolig oder gegenpolig sein. Bei gleichpoliger Anordnung zeigen jeweils die gleichen Pole der beiden MCDs nach unten (Nord/Nord oder Süd/Süd), bei gegenpoliger Anordnung jeweils die unterschiedlichen Pole (Nord/Süd oder Süd/Nord).

In einer anderen Anordnung werden die beiden MCDs nicht senkrecht aufgestellt, sondern um die Längsachse gekippt. Je nachdem, wie stark die Neigung ist und wie diese Neigungen der zwei MCDs zueinander positioniert sind, ergeben sich unterschiedliche Weitfelder, die für verschiedene Aufgaben genutzt werden können. Bei einer Anordnung sind die 2 MCDs um ca. 30 Grad aufeinander zu geneigt. Dies kann dann vorteilhaft sein, wenn der Sensor in deutlich unterschiedlichen Höhen vom Boden aus gesehen die Schranke passiert, was der Fall ist, wenn z. B. der Durchgang von Kindern und Erwachsene gleichzeitig erfasst werden soll. In ähnlicher Weise können die 2 MCDs auch liegenden angeordnet werden.

Bei der Anordnung zweier Marker im Sinne der erwähnten unsichtbaren Schranke besteht eine vorteilhafte gegenseitige Beeinflussung der beiden Magnetfelder, so dass Weitfelder erzeugt werden, die auf kleinem Raum starke Änderungen in der Intensität aufweisen und damit eine verbesserte Richtungsempfindlichkeit aufweisen, so dass auf diese Weise nicht nur eine Abstandsmessung mit hoher Genauigkeit möglich ist, sondern auch eine Aussage ermöglicht ist, aus welcher Richtung sich der Sensor - bzw. ein den Sensor tragendes Lebewesen - sich dem Marker bzw. der aus den Marken aufgebauten unsichtbaren Schranke nähert.

Bei der gleichpoligen Anordnung (Nord/Nord) ist das Maximum des Gesamtfeldes auf einen relativ kleinen Bereich beschränkt, so dass in diesem Bereich kleine Positionsänderungen zu starken Änderungen im magnetischen Feld führen. Beim Durchgang des Sensors durch die Schranke ergibt sich somit ein charakteristisches, räumlich hoch auflösendes Signal. Bei der demgegenüber gegenpoligen Anordnung (Nord/Süd) der beiden MCDs ergibt sich zwischen den Magnetfeldern ein sehr scharfes Minimum, was beim Durchgang des Sensors ebenfalls ein sehr charakteristisches Signal ergibt. Da die Magnetfelder eine Richtung haben, unterscheidet sich das Sensorsignal in Abhängigkeit davon, aus welcher Richtung die Magnetschranke betätigt wird.

Wenn die Anordnung der MCDs in so genannten Hütchen erfolgt, wie sie etwa aus dem Straßenverkehr für Markierungen bekannt sind, so kann das Innere des Hütchens gleichzeitig zur Abschirmung des Nahfeldes der Magneten benutzt werden. Die Hütchen erlauben eine unkomplizierte schnelle Anordnung der Marker, und eine ebenso schnelle Demontage. Die MCDs können, wenn sie in Form von Stäben ausgestaltet sind, auf die Hütchen aufgesteckt werden, so dass die Hütchen lediglich zu Gunsten eines sicheren Standes verwendet werden und es erlauben, die Erfassungs-Schranke werkzeuglos aufzustellen und werkzeuglos sowie rückstandsfrei wieder abzubauen. Ebenso ist eine Anbringung mittels gängiger Slalomstangenhalter möglich, oder die Stangen werden mit einem Erdspieß direkt in den Boden gesteckt.

Die Ausgestaltung der MCDs in Stabform ermöglicht zudem die Anbringung an bestehenden Infrastrukturen, beispielsweise an dem Flügel oder dem Rahmen eines Tores oder dergleichen. Je nach Sportart können die Dipole beispielsweise an Hürden oder an Slalomstangen o. dgl. angebracht werden, wobei je nach vorgesehener Anbringungsart der Marker und je nach vorgesehener Anbringungsart der Sensoren unterschiedlich starke Magnete für die Schaffung der Magnetischen Compound Dipole verwendet werden können, um auch bei größeren Entfernungen (beispielsweise Magnete in den Hütchen, und Sensoren im Leibgurt eines Reiters) eine ausreichend sichere Auslösung des Erfassungssignals zu gewährleisten.

Es kann vorgesehen sein, Magnetosensoren einzusetzen, die üblicherweise als elektronische Kompasse benutzt werden. bei dieser Anwendung erfassen die Sensoren das Erdmagnetfeld in allen drei Raumrichtungen. Ein Problem für die Nord/Süd-Erkennung sind oft externe Störfelder, welche die Messergebnisse beeinflussen und durch aufwendige Algorithmen möglichst herausgerechnet werden müssen. Vorschlagsgemäß wird jedoch diese Betrachtungsweise umgedreht: Das Erdmagnetfeld ist uninteressant, und die Nutzinformation steckt in dem externen Magnetfeld.

In einer bevorzugten Ausführungsform werden die Sensoren einschließlich der benötigen Steuer- und Speichereinheit in einem Gurt am Körper getragen. Der Sensor befindet sich dabei nahe dem Körperschwerpunkt in der Nähe der Wirbelsäule.

In einer Ausführung wird mindestens ein MCD eingesetzt. Als aktive Sensoren werden Magnetsensoren eingesetzt, wie sie z. B. in elektronischen Kompassen benutzt werden. Diese Sensoren messen das Magnetfeld in mindestens einer, bevorzugt in 3 (x,y,z) Raumrichtungen. Mit den verwendeten Permanentmagneten sind Abstände zwischen dem jeweiligen Marker und dem Sensor von 0,3 m bis 0,5 m problemlos zu verwirklichen. Damit können entfernungsabhängige Schaltvorgänge verwirklicht werden. Beispielsweise kann eine Messung nur dann vorgenommen werden, wenn eine zuvor bestimmte Distanz unterschritten oder überschritten wird, oder wenn die Entfernung in einem vorbestimmten Bereich liegt. Dieser "aktive" Bereich kann für unterschiedliche Personen unterschiedlich eingestellt sein. Für manche Anwendung ist der aktive Bereich möglichst groß. In diesem Fall wird nur nach Anwesenheit oder nach Nicht-Anwesenheit unterschieden, in anderen Fällen ist die Erfassung der Distanz wichtig.

In einer anderen Ausgestaltung der Erfindung wird die Frequenz der Drehung von Marker / Sensor zueinander über eine weite Distanz erfasst und gemessen.

Für eine exakte Zeitmessung im Bereich von Millisekunden ist eine steile Schaltcharakteristik nötig. Deshalb wird dafür die bereits erwähnte Anordnung einer magnetischen Schranke eingesetzt, die aus zwei MCDs besteht. Dabei wird die zeitliche Änderung der Feldstärke beim Durchgang des Sensors ausgewertet. Dabei wird der exakte Schaltpunkt durch einen Algorithmus bestimmt, der aus dem Verlauf des Messsignals einen charakteristischen Messzeitpunkt ermittelt. Dafür wird in einem ersten Schritt der Durchgang mittels bekannter Verfahren der Mustererkennung erkannt. Bei diesem Verfahren wird berücksichtigt, dass die genaue Ausprägung des Signales variabel ist und u. a. abhängt von der Art der Magnetschranke im Hinblick auf Länge, Lage und Anordnung der zwei MCDs zueinander, der Sensoranbringung im Hinblick auf Höhe über dem Boden, und eventuellen Störfeldern aus der Umgebung. Wichtig ist auch, ob der Durchgang mittig oder sehr nah an einer Seite der Magnetschranke erfolgt. Ist das Ereignis 'Durchgang' erkannt, wird der genaue Schaltzeitpunkt durch ein einstufiges oder mehrstufiges Verfahren innerhalb eines bestimmten Bereiches um die gefundenen Muster herum ermittelt. Dafür geeignet sind charakteristische Punkte in den Sensordaten wie z. B. Extremwerte, Nulldurchgänge, Schwerpunkte von Teilflächen, Schnittpunkte von Ausgleichsgeraden oder Steigungen bzw. statistische Werte solcher Punkte. Zur Ermittlung eines charakteristischen Zeitpunktes können auch Berechnungen im Frequenzbereich mittels FFT oder einer Waveletanalyse hinzugezogen werden.

Für die Erkennung und Berechnung kann das Sensorsignal entweder direkt benutzt oder z. B. durch Filteroperationen, Summenbildungen oder Ableitungen vorverarbeitet werden. Es kann sowohl jede Raumrichtung für sich oder Kombinationen von Vektoren, die aus 2 oder 3 Raumrichtungen berechnet wurden, betrachtet werden. Der Gesamtvektor aus allen 3 Richtungen ändert sich idealerweise bei Bewegungen innerhalb des Erdmagnetfeldes gar nicht, sondern nur bei Annäherung an die MCDs. Im Gegensatz zu Verfahren, die beispielsweise Schwellwertbasiert sind gewährleitstet dieses Verfahren eine robuste und gleichförmige Erkennung.

Die Anbringung des passiven Markers ist nicht wie bei Lichtschranken auf eine bestimmte Höhe festgelegt. Bei der Zeitmessung von Personen muss die Lichtschranke in Rumpfhöhe angebracht sein, eine tiefere Anbringung in Beinhöhe würde zu Fehlmessungen führen. Bei der vorschlagsgemäßen Magnetschranke ist die Anbringung jedoch deutlich weniger Höhenkritisch.

In einer anderen Ausprägung wird als Sensor ein Inertialmesssystem verwendet, wie es z. B. in vielen Smartphones vorhanden ist. Ein Inertialsystem besteht üblicherweise aus einer Kombination von einem Drei-Achsen-Beschleunigungsmesser und einem Drei-Achsen-Gyroskop, das zusätzlich durch einen Drei-Achsen-Magnetosensor ergänzt ist. Der Magnetosensor übernimmt dabei die Funktion des Sensors.

In einer anderen Ausführung liefert das Inertialsystem einen wichtigen Beitrag zur Unterdrückung von Störfeldern. Das Erdmagnetfeld hat eine vorgegebene Stärke, während das Nutzsignal im Weitfeld eine andere Stärke aufweist. Störfelder durch aktive elektrische Geräte, Eisenteile, Betonarmierungen u. dgl. liegen oft in der Größenordnung des Nutzsignals oder darüber. Um Fehlauslösungen zu verhindern, werden die Informationen des Inertialsystems als Filter mitbenutzt. So kann beispielsweise aufgrund der Beschleunigungsdaten rückgeschlossen werden, ob und in welche Richtung sich der Läufer zu einem bestimmten Zeitpunkt bewegt oder nicht. Signale der Magnetschranke außerhalb des Bewegungszeitraumes können ignoriert werden. Die Gyroskope des Inertialsystems zeigen an, ob das System sich dreht oder nicht. Änderungen des Magnetfeldes in den entsprechenden Achsen ohne Drehinformationen des Gyroskops können als Störfelder erkannt werden. Die Berechnung der Trajektorie (Lage und Positionsänderung im 3D-Raum) aufgrund der I-nertialdaten kann helfen, das Zeitfenster, in welchem sich die Schranke in Reichweite befindet weiter einzuschränken und Signale außerhalb zu ignorieren.

Die Messdaten der Magnetschranken können auch mit Schrittdaten abgeglichen und kombiniert werden. Dazu kann ein externer Schrittzähler, der mit den Magnetodaten synchronisiert ist, verwendet werden. In einer anderen Ausprägung werden die Schritte anhand von einem oder mehreren Messkanälen des Inertialsystemes erkannt.

In ähnlicher Weise kann statt der Schrittdaten die aus den Inertialdaten berechnete Trajektorie benutzt werden. Die Trajektorien haben den Nachteil, dass sie die Änderung der Bewegung gut abbilden, dass aber die Absolutpositionen aufgrund der Aufsummation kleiner Fehler immer ungenauer wird. Durch Messung verschiedener Distanzen mit der Magnetschrankenfunktion können diese relativen Bewegungen mit den gemessenen Markerpositionen in Übereinstimmung gebracht werden. Dadurch ist es möglich, nicht nur die Durchschnittsgeschwindigkeit zwischen den Markern anzugeben, sondern die Trajektorie zwischen den Messpunkten mit hoher Genauigkeit zu bestimmen. In einer ähnlichen Anwendung kann die Markererkennung dazu genutzt werden, eine beliebige Messung im Hinblick auf Zeit / Raum zu untergliedern und damit die interessanten Stellen in der Gesamtmessung zu identifizieren.

In einer anderen Ausprägung erfolgt die Bestimmung der Trajektorien innerhalb eines magnetischen Weitfeldes. Bei der Berechnung von Lage und Position des Sensorsystemes kann der bekannte Feldlinienverlauf mit berücksichtigt und damit die Genauigkeit deutlich gesteigert werden.

Um unabhängig von äußeren Einflüssen zu werden, kann die Messung der Feldstärke durch mehr als einen räumlich versetzten Sensor geschehen. Durch den Bezug dieser Feldstärken zueinander kann ein exakter Schaltpunkt bestimmt werden.

Zur Unterscheidung verschiedener Marker voneinander können verschiedene Verfahren benutzt werden. Bei einem Verfahren dient die absolute Feldstärke zur Unterscheidung. Bei den Magnetschranken ergeben sich insgesamt 6 verschiedene Anordnungsmöglichkeiten der 2 MCDs zueinander, es gibt 3 Möglichkeiten der Lage zueinander nämlich stehend, liegend parallel oder liegend in einer Linie, und jeweils zwei Anordnungen, nämlich gleichpolig oder gegenpolig. Dadurch ergeben sich unterschiedliche räumliche Verläufe der Magnet-Feldlinien.

Durch unterschiedliche Art und Form des Verlängerungsjochs kann das magnetische Feld beispielsweise breiter oder schmaler ausgelegt werden. Mehrere Felder können hintereinander geschaltet werden, beispielsweise dadurch, dass bei einem Tor 2 Schranken dicht hintereinander folgen, bei einem anderen 3 Schranken usw. Dies gestattet es, relative Feldstärkenverläufe zueinander zu bestimmen. Dadurch kann z. B. der Schaltzeitpunkt oder die Identität des Markers unabhängig von den absoluten Feldstärken und damit unabhängig von äußeren Einflüssen wie z. B. der Umgebungstemperatur bestimmt werden.

Das Marker / Sensor System kann zur Navigation benutzt werden. Dafür werden bestimmte Orte durch einen oder durch mehrere Marker räumlich untergliedert. Es können z. B. Bereich definiert werden, die betreten oder nicht betreten werden sollen. Bei Eintritt in solch einen Bereich kann ein Signal an den Anwender generiert werden. Das kann dazu benutzt werden, den Anwender bzw. ein Gerät von einem Bereich fernzuhalten oder in eine bestimmte Richtung zu dirigieren.

In einer anderen Anwendung werden verschiedenen Orte durch Durchgänge unterschieden, die mit einer Magnetschranke markiert sind. Beim Durchgang der richtigen bzw. falschen Schranke wird im Gurt ein entsprechendes Signal zur Rückmeldung an den Anwender generiert.

Wie oben beschrieben, besteht ein MCD aus mehreren Einzelkomponenten, die eine bestimmte räumliche Anordnung zueinander haben müssen. Sind Teile dieser Anordnung beweglich ausgeführt, kann die magnetische Eigenschaft des Compound Dipols in weiten Bereichen verändert und damit moduliert werden. Sind diese beweglichen Teile mit einer Tür, einem Fenster, einer Barriere in Form einer Schranke, einem Schwimmer o. dgl. verbunden, wirkt sich die Stellung oder Position dieser Teile auf die Messung aus und kann damit registriert werden. Der Vorteil einer solchen Anordnung liegt darin, dass ein solches System keine zusätzliche Energieversorgung benötigt.

In einer Ausführung befindet sich zwischen 2 fest angeordneten Magneten einen drehbare Scheibe. Diese Scheibe hat je nach Drehrichtung eine unterschiedliche magnetische Permeabilität. Im einfachsten Fall befindet sich auf der Scheibe ein radial verlaufendes Joch. Ist die Scheibe so gedreht, dass sich dieses Joch zwischen den beiden Magneten befindet, ergibt sich ein MCD, bei anderer Anordnung nicht. Ein ähnlicher Effekt kann auch dadurch ausgelöst werden, dass das MCD durch ein zweites, bewegliches MCD oder Magneten beeinflusst wird, oder umgedreht.

In einer anderen Ausführung wird der modulierend wirkende MCD / Magnet an einem Fitnessgerät angebracht. Das primäre MCD/Sensor System wird dazu benutzt, um die Anwesenheit des Sportlers am Fitnessgerät zu detektieren, mit dem modulierend wirkenden MCD/Magneten wird die Ausführung und Anzahl der ausgeführten Übungen erfasst. In einer anderen Anwendung wird die Magnetschranke zur Zeitmessung einer Übung am Fitnessgerät benutzt, der modulierende MCD/Magnet kodiert den dazu nötigen Kraftaufwand. In einer anderen Ausführung kann der modulierende MCD/Magnet auch an anderen Personen befestigt werden. Dadurch ist es möglich, verschiedene Positionen von Personen zueinander zu erkennen.

In einer anderen Anwendung wird die Richtcharakteristik des Systems dazu benutzt, den Blickwinkel eines Probanden zu bestimmen. Der Vorteil liegt darin, dass der Proband nur den passiven Marker ohne Energieversorgung und Datenübertragung tragen muss. Die aktive Komponente befindet sich in dem Fall beispielsweise in einem Gerät, beispielsweise einem 3D-Fernsehgerät.

Der Verlauf und die Stärke der Feldlinien können auch durch einen Elektromagneten erzeugt oder moduliert werden. Im ersteren Fall übernimmt der Elektromagnet den Part des Permanentmagneten, im letzten Fall moduliert er dessen Feld. Damit können die Eigenschaften der Magnetschranke in einem weiten Bereich in Bezug auf Reichweite, Erkennungssicherheit, Identität u. dgl. verändert werden. In einer Ausführung kann das System so eingestellt werden, dass es nur auf bestimmte, beispielsweise wechselnde Magnetfelder reagiert oder es können Zusatzinformationen aufmoduliert werden.

Ausführungsbeispiele der Erfindung werden nachfolgend anhand der rein schematischen Darstellungen näher beschrieben. Dabei zeigt
- Fig. 1: ein erstes Ausführungsbeispiel, bei welchem zwei MCDs eine Schranke bilden,
- Fig. 2: die Anordnung eines MCD in einem Hütchen, wie es in dem Ausführungsbeispiel der Fig. 1 verwendet werden kann,
- Fig. 3: ein Ausführungsbeispiel, bei welchem ein MCD an einem ersten Fitness-Gerät vorgesehen ist,
- Fig. 4 bis 6: Ausführungsbeispiele, bei welchen ein MCD an einem zweiten Fitness-Gerätetyp vorgesehen ist,
- Fig. 7: eine erste Ausgestaltung eines MCD,
- Fig. 8: eine zweite Ausgestaltung eines teilweise dargestellten MCD,
- Fig. 9: einen mit einer Hülle versehenen MCD,
- Fig. 10 bis 15: unterschiedliche Ausgestaltungen von Magnetschranken unter Verwendung von MCDs,
- Fig. 16: eine Magnetschranke im Reitsport,
- Fig. 17: eine Magnetschranke im Ballsport mitsamt einem zugehörigen Spielball, und
- Fig. 18 und 19: Darstellungen des Verlaufs von Magnetfeldlinien bei zwei unterschiedlich ausgestalteten magnetischen Schranken.

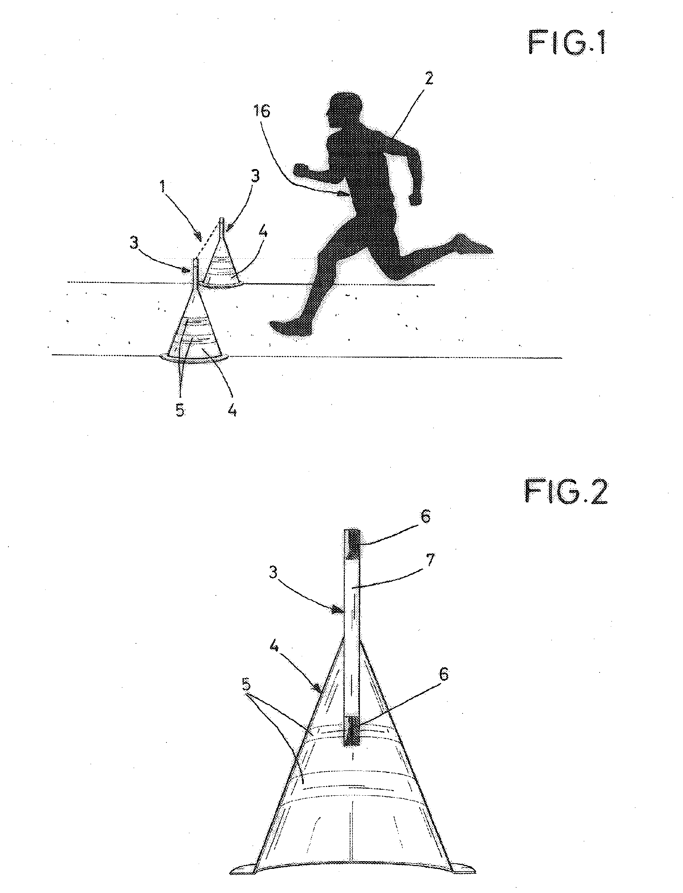

In Fig. 1 ist ein Sportler 2 dargestellt, der sich zu einer unsichtbaren Schranke 1 bewegt: Der Sportler trägt einen Leibgurt mit einem Sensor 16, während eine gestrichelt angedeutete Schranke 1 ortsfest montiert und aus zwei Markern gebildet ist. Die beiden Marker sind jeweils als MCD (Magnetischer Compound Dipol) 3 ausgestaltet und an so genannten Hütchen 4 montiert, also an Pylonen wie sie beispielsweise zur Sicherung im Straßenverkehr bekannt sind. So wird eine Art Tor geschaffen, durch welches der Sportler 2 laufen soll, und welches aufgrund der auffälligen Farbgebung der Hütchen 4 mit zwei kontrastfarbigen Streifen 5 für den Sportler problemlos erkennbar ist. Somit können mehrere Schranken 1 auch abseits von Sportplätzen errichtet werden, beispielsweise bei Sportveranstaltungen, bei welcher eine Vielzahl von Sportlern 2 durch Innenstädte oder andere Laufstrecken geführt werden sollen.

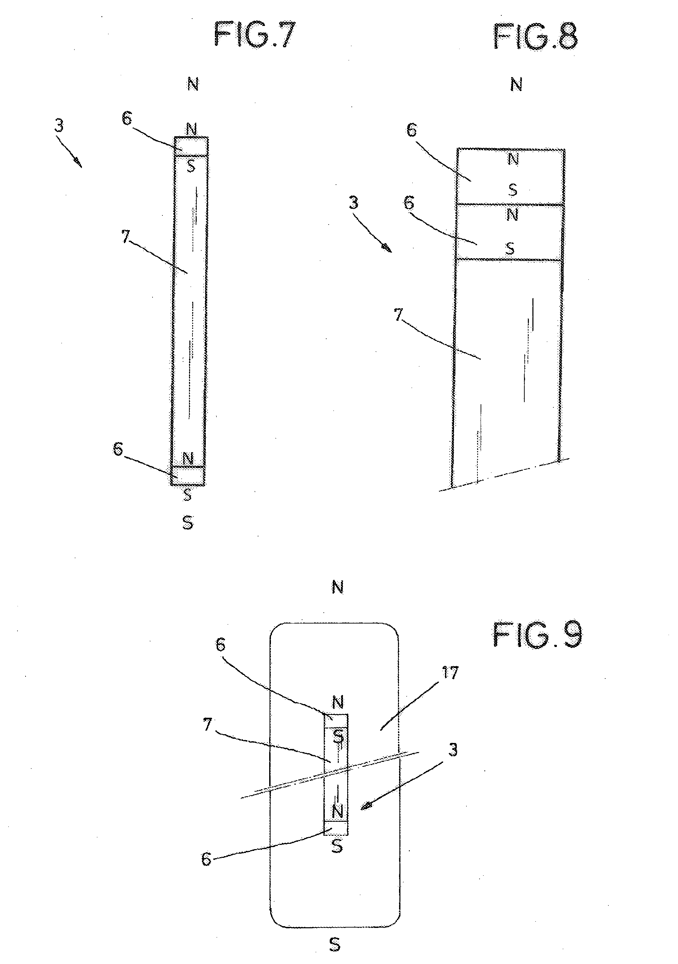

Die Schranke 1 ergibt sich als gedachte, unsichtbare Linie zwischen zwei Begrenzungspfosten des vom Sportler 2 zu durchlaufenden virtuellen Tores, wobei der Aufbau eines solchen Pfostens aus Fig. 2 ersichtlich ist: Der Pfosten des Tores besteht aus dem Hütchen 4 und dem in das Hütchen 4 integrierten MCD 3. Der MCD selbst enthält entsprechend Fig. 7 zwei Magnete 6 sowie ein dazwischen angeordnetes metallischen Verlängerungsjoch 7. Entsprechend Fig. 8 kann vorgesehen sein, zwei oder mehr Magnete 6 an jedem Ende des MCD 3 vorzusehen. Der MCD 3 ist entfernbar in dem Hütchen 4 gehalten, wobei das Hütchen 4 beispielsweise eine oben offen endende Hülse aufweisen kann, in welche der MCD 3 eingesteckt wird, oder der MCD 3 kann einen umlaufenden Kragen an seinem Verlängerungsjoch 7 aufweisen, der die Einstecktiefe in das Hütchen 4 begrenzt. Jedenfalls können mehrere Hütchen 4, nachdem die MCDs 3 aus ihnen entfernt worden sind, platzsparend ineinander gestapelt werden, und ebenso können die MCDs 3 platzsparend gebündelt werden, so dass insgesamt der organisatorische Aufwand, der mit dem Errichten und der späteren Demontage einer Vielzahl von Schranken 1 bei der Organisation eines sportlichen Ereignisses verbunden ist, dadurch reduziert werden kann, dass die Zeiterfassungsschranken mit nur geringem Platzbedarf transportiert und auf besonders unkomplizierte Weise errichtet werden können, da nämlich keine Verkabelung, Auswerteelektronik o. dgl. für die Errichtung und den Betrieb der Schranken 1 erforderlich ist, der fest an der Strecke installiert werden müsste.

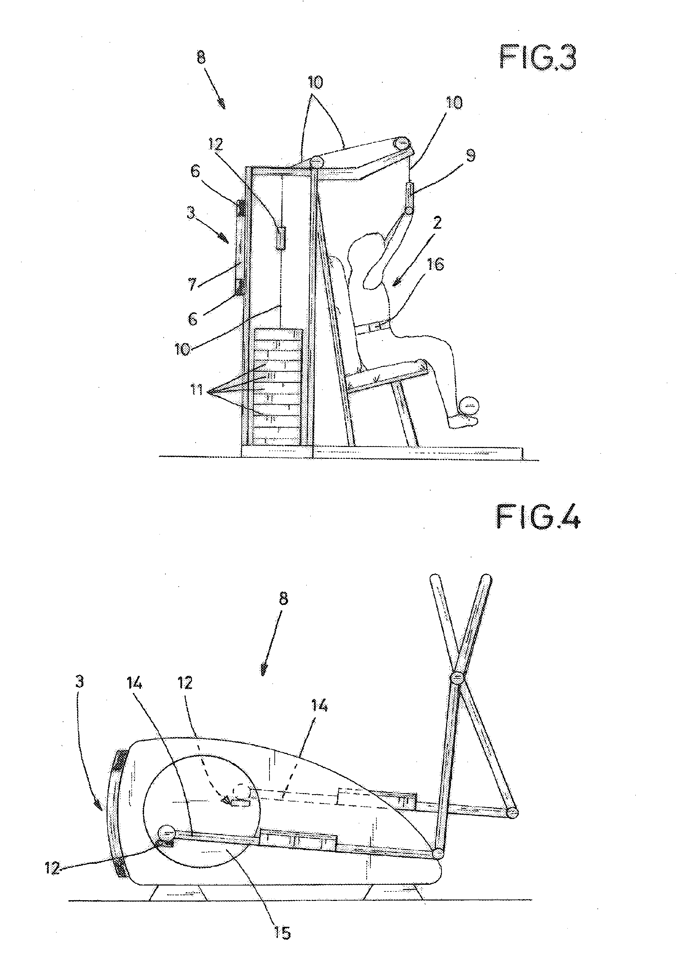

In Fig. 3 ist ein Fitnessgerät 8 dargestellt, das einen vom Sportler 2 betätigten Bügel 9 aufweist, wobei der Sportler 2 einen Leibgurt und einen Sensor 16 trägt. Der Bügel 9 ist über einen mehrfach umgelenkten Seilzug 10 mit einer Vielzahl von Gewichten 11 verbunden.

Der Seilzug 10 trägt nicht nur die Gewichte 11, sondern auch einen Magneten 12, der mitsamt dem Seilzug 10 beweglich ist, und insbesondere relativ zu einem ortsfest montierten MCD 3 beweglich ist, so dass sowohl die Anwesenheit des Sportlers 2 als auch die Anzahl der Bewegungen, die dieser mit dem Bügel ausführt, sensorisch durch Modulation des Magnetfeldes von MCD 3 erfasst wird, ohne dass es bei diesem in Fig. 3 dargestellten System einer Schranke 1 bedarf. Die Modulation kann auch durch ein zweites MCD 3 erfolgen.

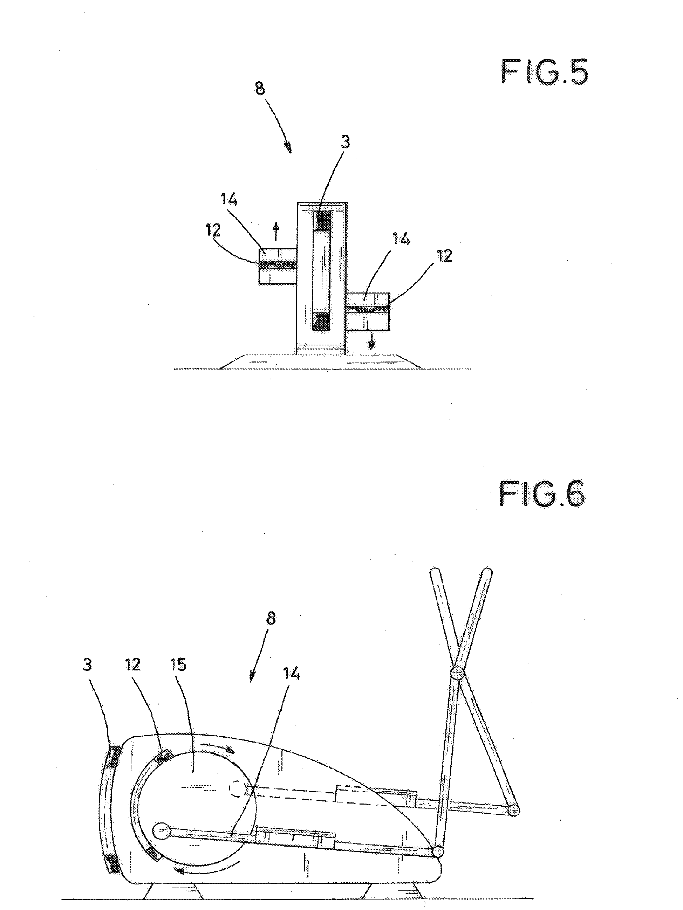

Auch bei dem in den Fig. 4 bis 6 dargestellten System zur Erfassung der Position eines Gegenstandes ist keine Schranke 1 erforderlich: Bei dem Fitnessgerät 8 handelt es sich um einen so genannten Ellipsentrainer, der in den Fig. 4 und 6 von der Seite dargestellt ist, und wobei Fig. 5 Teile des Ellipsentrainers von dessen Rückseite her gesehen darstellt. Ähnlich wie in Fig. 3 trägt auch hier der Sportler 2 einen Leibgurt mit Sensor 16, und ein beweglicher Magnet 12 ist am Fitnessgerät 8 angeordnet, an dem auch der ortsfeste MCD 3 angeordnet ist, so dass aufgrund der Relativbeweglichkeit des MCD 3 und des Magneten 12 zueinander mit Hilfe des vorschlagsgemäßen Systems die Anzahl der Bewegungszyklen erfasst werden können, die der Sportler 2 an dem Fitnessgerät 8 ausführt.

In zwei unterschiedlichen Varianten des Ellipsentrainers kann erstens gemäß Fig. 4 und 5 vorgesehen sein, dass der beweglich gelagerte Magnet 12 an einer von zwei Trittplatten 14 vorgesehen ist, auf denen der Sportler steht, oder dass an beiden Trittplatten 14 jeweils ein beweglicher Magnet 12 vorgesehen ist. Oder es kann zweitens gemäß Fig. 6 vorgesehen sein, dass der bewegliche Magnet 12 an einer Schwungscheibe bzw. Kurbelscheibe 15 befestigt ist, welche mittels der als Kurbeln an die Kurbelscheibe 15 angreifenden Trittplatten 14 in Drehung versetzt werden kann.

Anstatt eines Magneten 12 kann auch ein zweiter, beweglicher MCD 3 vorgesehen sein.

Anstatt dass der Sensor 16 vom Sportler 2 getragen wird, kann er auch vom Fitnessgerät 8 entfernt verbaut sein.

In Fig. 9 ist ein MCD 3 dargestellt, der mit einer Hülle 17 versehen ist. Die Hülle 17 muss nicht als magnetische Abschirmung ausgestaltet sein, sondern dient lediglich dazu, einen Mindestabstand des MCD 3 zu umgebenden Objekten sicherzustellen, so dass magnetische Einflüsse, die durch das vergleichsweise starke magnetische Feld im Nahbereich des MCD 3 hervorgerufen werden können, zuverlässig vermieden werden. Zudem kann die Hülle 17 beispielsweise als Witterungsschutz ausgestaltet sein, so dass der Werkstoff des Verlängerungsjochs 7 beispielsweise vor Korrosion geschützt ist, und schließlich kann die Hülle 17 auch als mechanischer Schutz sowohl für den MCD 3 dienen als auch zum Schutz der Sportler 2, wenn sie beispielsweise eine Magnetschranke 1 durchlaufen, indem die Hülle 17 beispielsweise als Polster ausgestaltet ist.

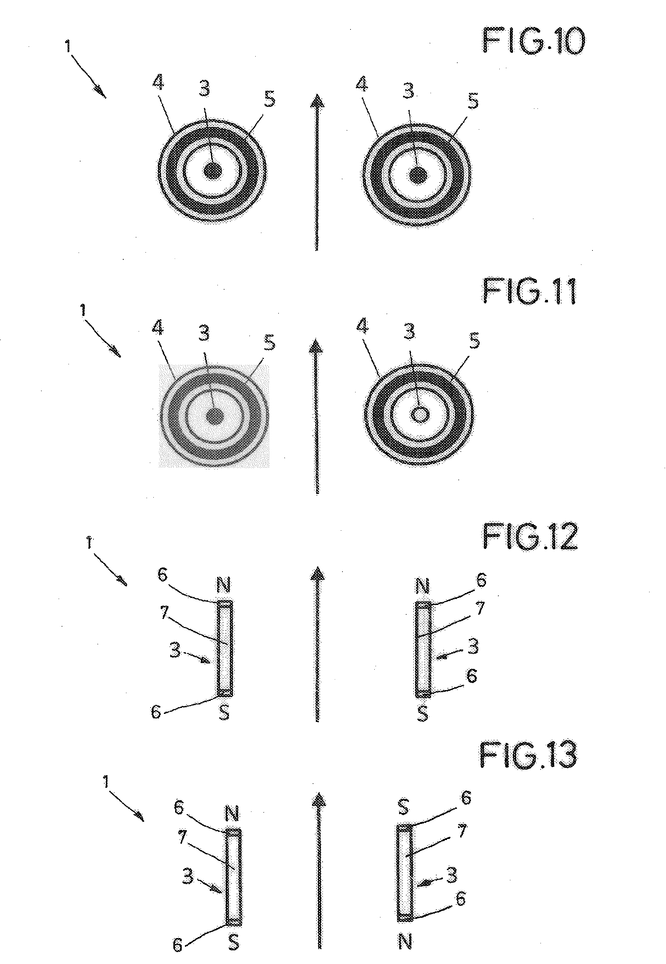

Die Figuren 10 bis 15 zeigen sechs unterschiedliche Arten Magnetschranken 1 auszugestalten, wobei diese Darstellungen stets eine Magnetschranke in Draufsicht zeigen. Mit einem Pfeil ist die Durchlaufrichtung des Sportlers durch die Schranke 1 angedeutet. Unterschiedlichen Anordnungen ermöglichen die Erkennung der individuellen Schranken, da sich die Änderung des Magnetfeldes beim Durchgang des Sensors in den Anordnungen unterscheidet. Durch schräge Ausrichtungen der MCDs sind weitere Anordnungskombinationen möglich.

In Fig. 10 ist eine Draufsicht auf eine magnetische Schranke 1 dargestellt, bei der zwei Hütchen 4 mit kontrastfarbigen Streifen 5 versehen sind und einen jeweils aufrecht ausgerichteten MCD 3 aufweisen. Beide MCDs 3 sind dabei gleichsinnig ausgerichtet, beispielsweise mit den Nordpolen der Magnete 6 nach oben weisend oder mit den Südpolen der Magnete 6 nach oben weisend.

In Fig. 11 ist eine grundsätzlich gleich ausgestaltete magnetische Schranke 1 dargestellt, wobei die beiden MCDs 3 in den Hütchen 4 unterschiedlich ausgerichtet sind, so dass beim einen MCD die Nordpole der Magnete 6 nach oben weisen und beim anderen MCD in dem anderen Hütchen 4 die Nordpole der dort verwendeten Magneten 6 nach unten weisen.

Die Figuren 12 und 13 zeigen zwei magnetische Schranken 1, bei denen die MCDs 3 liegend ausgerichtet sind, also parallel zur Laufrichtung des Sportlers während des Tordurchgangs. Anhand der "N" und "S"-Markierungen ist ersichtlich, dass Fig. 12 eine gleichsinnige Ausrichtung beider MCDs 3 betrifft, während die beiden MCDs 3 eine magnetische Schranke 1 von Fig. 13 gegensinnig angeordnet sind.

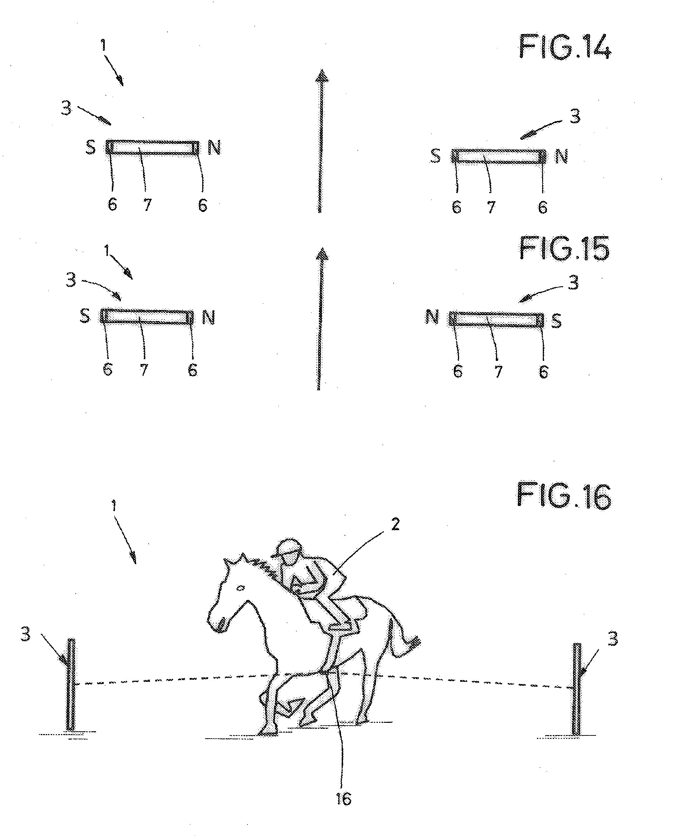

Die Fig. 14 und 15 zeigen zwei Ausgestaltungen magnetischer Schranken 1, bei denen die MCDs 3 ebenfalls liegend ausgerichtet sind, jedoch nicht in Laufrichtung des Sportlers, sondern quer dazu. Dabei betrifft Fig. 14 eine Ausgestaltung, in welcher die beiden MCDs 3 gleichsinnig ausgerichtet sind, während sie bei der magnetischen Schranke 1 von Fig. 15 gegensinnig ausgerichtet sind, so dass bei dieser Ausführungsform die beiden Nordpole der beiden MCDs 3 nach innen weisen, also zum Sportler 2 bzw. zur Durchlassöffnung der magnetischen Schranke 1 hin ausgerichtet sind.

In Fig. 16 ist ein Sportler 2 dargestellt, der als Reiter auf einem Pferd den Durchgang durch eine magnetische Schranke 1 durchführt. Die beiden MCDs 3 sind aufrecht stehend angeordnet und bei diesem Ausführungsbeispiel trägt nicht der Sportler 2 den Leibgurt, sondern der Leibgurt ist in Form eines Sattelgurtes ausgestaltet, den das Pferd trägt. Im unteren Bereich dieses Sattelgurtes ist der Sensor 16 angeordnet, wobei zwei gestrichelt dargestellte Wirklinien vom Sensor 16 zu den MCDs 3 der magnetischen Schranke 1 verlaufen und rein schematisch die in der Aktion zwischen dem Sensor 16 und den MCDs 3 andeuten.

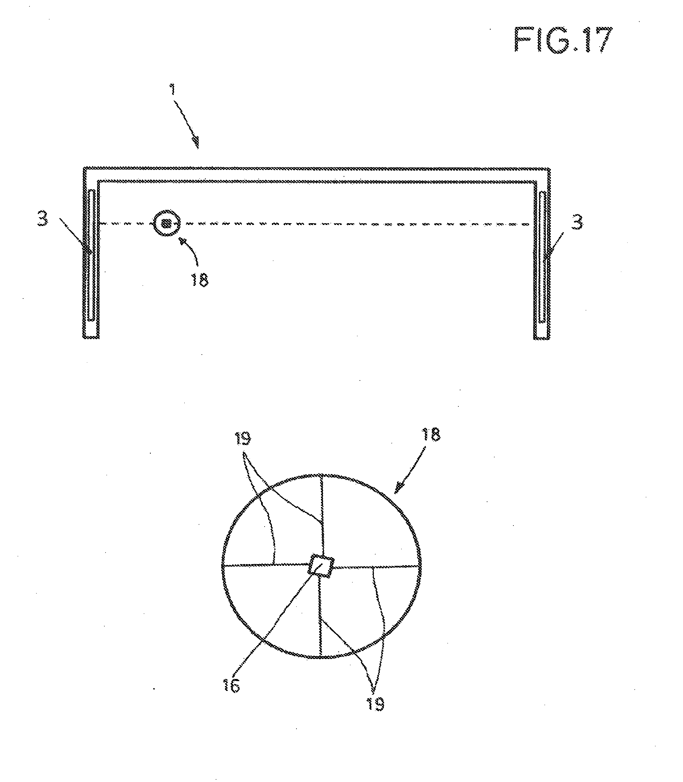

In Fig. 17 ist die magnetische Schranke 1 nicht vorgesehen, um den Durchgang eines Sportlers zu erfassen, sondern den Durchgang eines Spielballs 18. Die beiden MCDs 3 sind an den Pfosten eines Fußballtores vorgesehen und können je nach verwendetem Werkstoff des Fußballtors in den jeweiligen Pfosten eingelassen sein. Der Spielball 18 durchquert in der oberen Darstellung von Fig. 17 momentan die Torlinie und damit die magnetische Schranke zwischen den beiden MCDs 3. Die Wirklinien zwischen einem im Spielball 18 befindlichen Sensor 16 und den MCDs 3 sind gestrichelt eingezeichnet.

Der zugehörige Spielball 18, der unterhalb des Tores noch einmal in einem größerem Maßstab dargestellt ist, trägt in seinem Inneren den Sensor 16, wobei der Sensor 16 mit Hilfe einer elastischen Aufhängung 19 geschützt im Inneren des Spielballs 18 aufgehängt ist. Der Sensor 16 kann drahtlos über ein Datenkabel nach Beendigung des Spiels ausgelesen werden. Besonders vorteilhaft kann jedoch vorgesehen sein, dass der Sensor 16 mit einem Funkmodul ausgestattet ist, so dass noch während des Spiels, praktisch in Echtzeit, die Auswertung der Sensorsignale erfolgen kann und somit beispielsweise eine unbestechliche Aussage darüber vorliegt, ob der Spielball 18 die Torlinie des Fußballtors durchquert hat.

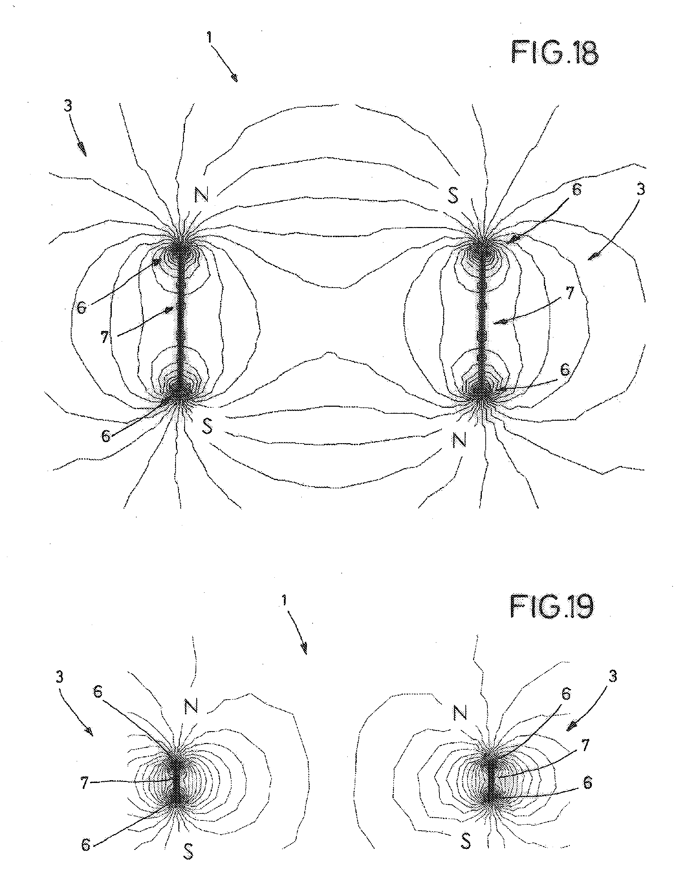

In Fig. 18 ist der Verlauf magnetischer Feldlinien zweier MCDs 3 dargestellt, die gegensinnig angeordnet ist, wie anhand der "N" und "S"-Kennzeichnungen der magnetischen Nord- und Südpole erkennbar ist.

Fig. 19 zeigt bei gleichem Abstand der beiden MCDs 3 voneinander, also bei gleicher Breite der magnetischen Schranke 1 den Verlauf der magnetischen Feldlinien für den Fall einer gleichsinnigen Ausrichtung der Magnete 6 an den MCDs 3.

## Patentansprüche

1. System zur Erfassung der Position eines Gegenstandes, mit Hilfe von einer passiven, als Marker bezeichneten Komponente und von einer aktiven, mit einer Energieversorgung und einer elektronischen Schaltung versehenen und als Sensor bezeichneten Komponente,
wobei der Marker und der Sensor relativ zueinander beweglich sind, indem eine Komponente an dem Gegenstand befestigt und gemeinsam mit dem Gegenstand beweglich ist, und eine Komponente ortsfest vorgesehen ist,
und wobei bei Unterschreitung eines bestimmten, so genannten Erfassungsabstands der Sensor automatisch die Anwesenheit des Markers detektiert und ein Erfassungssignal erzeugt, wobei der Marker ortsfest angeordnet ist und der Sensor gemeinsam mit dem Gegenstand beweglich ist,
wobei die elektronische Schaltung des Sensors eine Zeitbasis aufweist und der Zeitpunkt des Erfassungssignals automatisch abgespeichert wird,
und wobei der Marker magnetisch und der Sensor (12) als Magnetsensor ausgestaltet ist,
**dadurch gekennzeichnet,**
**dass** der Marker als Magnetischer Compound Dipol (3) ausgestaltet ist, nämlich als eine Anordnung mit einem Verlängerungsjoch (7), an dessen beiden Enden jeweils wenigstens ein Magnet (6) angeordnet ist, derart, dass ein verlängerter magnetischer Gesamt-Dipol entsteht,
mit zwei in Reihe und gleichsinnig ausgerichtet angeordneten Magneten (6),
wobei der Marker ein Verlängerungsjoch (7) aufweist, welches aus einem ferromagnetischen Material besteht und wenigstens zwei Zentimeter lang ist,
und wobei an jedem Ende des Verlängerungsjochs (7) ein Magnet (6) angeordnet ist.

2. System nach Anspruch 1,
**dadurch gekennzeichnet,**
**dass** mehrere Sensoren (12) vorgesehen sind, die jeweils an einem anderen Gegenstand angeordnet sind.

3. System nach Anspruch 1 oder 2,
**dadurch gekennzeichnet,**
**dass** mehrere Marker vorgesehen sind,
die so weit voneinander beabstandet sind, dass sie mehrere Erfassungsbereiche schaffen.

4. System nach Anspruch 3,
**dadurch gekennzeichnet,**
**dass** die Marker jeweils eine individuelle Kennung aufweisen,
und **dass** die elektronische Schaltung des Sensors (12) ein für den jeweiligen Marker typisches Erfassungssignal erzeugt.

5. System nach einem der vorhergehenden Ansprüche,
**dadurch gekennzeichnet,**
**dass** das Verlängerungsjoch (7) als Eisenstab mit einer Länge von mehr als 10 cm ausgestaltet ist.

6. System nach einem der vorhergehenden Ansprüche,
**dadurch gekennzeichnet,**
**dass** eine Marker-Anordnung verwendet wird, welche wenigstens 2 Magnetische Compound Dipole (3) aufweist, die im Abstand von wenigstens mehreren Dezimetern angeordnet sind und eine unsichtbare Schranke (1) bilden.

7. System nach einem der vorhergehenden Ansprüche,
**dadurch gekennzeichnet,**
**dass** der Sensor (12) in einem Leibgurt angeordnet ist.

8. System nach einem der vorhergehenden Ansprüche,
**dadurch gekennzeichnet,**
**dass** wenigstens ein Magnetischer Compound Dipol (3) vorgesehen ist,
sowie ein zusätzlicher Magnet (12),
wobei der Magnet (12) relativ zum Magnetischer Compound Dipol (3) beweglich und das Magnetfeld des Magnetischer Compound Dipol (3) oder der Magnetschranke modulierend angeordnet ist.

9. System nach einem der vorhergehenden Ansprüche,
**dadurch gekennzeichnet,**
**dass** wenigstens ein erster Magnetischer Compound Dipol (3) vorgesehen ist, sowie ein zusätzlicher Magnetischer Compound Dipol (3) welcher relativ zum ersten Magnetischer Compound Dipol (3) beweglich und das Magnetfeld des ersten Magnetischer Compound Dipol (3) oder einer unter Verwendung des ersten Magnetischer Compound Dipol (3) gebildeten Magnetschranke modulierend angeordnet ist.

## Claims

1. System for detecting the position of an object with the aid of a passive component termed "marker" and an active component termed "sensor" which is provided with a power supply and an electronic circuit,
where the marker and the sensor can be moved in relation to one another, where one component is fixed to the object, which then moves with the object, and one component remains stationary,
and where, when the distance falls below a given so-called detecting distance, the sensor automatically detects the presence of the marker and generates a detecting signal, where the marker is arranged immovably and the sensor moves together with the object,
where the electronic circuit of the sensor has a time setting and the time of the detecting signal is automatically recorded,
and where the marker is designed as a magnet and the sensor (12) as a magnetic sensor, **characterised in that** the marker is designed as a magnetic compound dipole (3), i.e. as an arrangement with an extension yoke (7) at both of whose ends at least one magnet (6) is arranged, in such a way that an extended overall magnetic dipole is formed with two unidirectionally aligned magnets (6) arranged in series,
where the marker has an extension yoke (7) consisting of a ferromagnetic material and is at least two centimetres in length,
and where a magnet (6) is arranged at each end of the extension yoke (7).

2. System in accordance with claim 1, **characterised in that** several sensors (12) are provided, each of which is arranged on a different object.

3. System in accordance with claim 1 or claim 2, **characterised in that** several markers are provided which are located at a sufficient distance from one another to create several detecting zones.

4. System in accordance with claim 3, **characterised in that** each of the markers has a different identifier and that the electronic circuit of the sensor (12) generates a detecting signal which is unique for each individual marker.

5. System in accordance with any of the aforementioned claims, **characterised in that** the extension yoke (7) is designed as an iron bar having a length of more than 10 cm.

6. System in accordance with any of the aforementioned claims, **characterised in that** an arrangement of markers is used which comprises at least two magnetic compound dipoles (3) which are arranged at a distance of at least several decimetres and form an invisible barrier (1).

7. System in accordance with any of the aforementioned claims, **characterised in that** the sensor (12) is arranged on a body belt.

8. System in accordance with any of the aforementioned claims, **characterised in that** at least one magnetic compound dipole (3) is provided as well as an additional magnet (12), where the magnet (12) is movable in relation to the magnetic compound dipole (3) and the magnetic field of the magnetic compound dipole (3) or the magnetic barrier is arranged to act as a modulator.

9. System in accordance with any of the aforementioned claims, **characterised in that** at least one magnetic compound dipole is provided as well as an additional magnetic compound dipole (3) which is arranged to move in relation to the first magnetic compound dipole (3) and the magnetic field of the first magnetic compound dipole (3) or a magnetic barrier formed by making use of the first magnetic compound dipole (3) is arranged to act as a modulator.

## Revendications

1. Système destiné à saisir la position d'un objet à l'aide d'un composant passif appelé « marqueur » et d'un composant actif appelé « capteur » équipé d'une alimentation en énergie et d'un circuit électronique, sachant que le marqueur et le capteur sont déplaçables l'un relativement à l'autre vu qu'un composant est fixé contre l'objet et déplaçable solidairement avec cet objet, et qu'un composant est prévu à un endroit fixe,
et sachant qu'en cas de franchissement par défaut d'un écart précis dit de détection, le capteur détecte automatiquement la présence du marqueur et génère un signal de saisie, sachant que le marqueur est agencé à un endroit fixe et que le capteur est déplaçable avec l'objet,
sachant que le circuit électronique du capteur présente une base-temps et que l'instant du signal de saisie est automatiquement enregistré,
et sachant que le marqueur est configuré magnétique et que le capteur (12) est configuré comme capteur magnétique, **caractérisé en ce que** le marqueur est configuré comme dipôle composite magnétique (3), à savoir comme un agencement avec montant de prolongement (7) aux deux extrémités duquel est disposé au moins un aimant (6), de sorte qu'apparaisse un dipôle intégral magnétique prolongé présentant deux aimants (6) agencés en série et orientés dans le même sens,
sachant que le marqueur présente un montant de prolongement (7) composé d'un matériau ferromagnétique et qu'il mesure au moins deux centimètres de long,
et sachant qu'à chaque extrémité du montant de prolongement (7) est agencé un aimant (6).

2. Système selon la revendication 1, **caractérisé en ce que** sont prévus plusieurs capteurs (12) agencés chacun contre un autre objet.

3. Système selon la revendication 1 ou 2, **caractérisé en ce que** plusieurs marqueurs sont prévus présentant un écart entre eux tel qu'ils créent plusieurs zones de saisie.

4. Système selon la revendication 3, **caractérisé en ce que** les marqueurs présentent chacun un identifiant individuel et que le circuit électronique du capteur (12) génère un signal de saisie typique pour le marqueur respectif.

5. Système selon l'une des revendications précédentes, **caractérisé en ce que** le montant de prolongement (7) est configuré comme une barre de fer longue de plus de 10 cm.

6. Système selon l'une des revendications précédentes, **caractérisé en ce qu'**est utilisé un agencement de marqueurs comportant au moins 2 dipôles composites magnétiques (3) agencés à une distance d'au moins plusieurs décimètres et qui forment un barrage (1) invisible.

7. Système selon l'une revendications précédentes, **caractérisé en ce que** le capteur (12) est agencé dans une ceinture corporelle.

8. Système selon l'une des revendications précédentes, **caractérisé en ce qu'**au moins un dipôle composite magnétique (3) est prévu, ainsi qu'un aimant supplémentaire (12), sachant que l'aimant (12) se déplace relativement au dipôle composite magnétique (3) et que le champ magnétique du dipôle composite magnétique (3) ou du barrage magnétique est agencé de manière modulatrice.

9. Système selon l'une des revendications précédentes, **caractérisé en ce qu'**est prévu au moins un premier dipôle composite magnétique, ainsi qu'un dipôle composite magnétique (3) supplémentaire déplaçable relativement au premier dipôle composite magnétique (3), et que le champ magnétique du premier dipôle composite magnétique (3) ou d'un barrage magnétique formé en utilisant le premier dipôle composite magnétique (3) est agencé de manière modulatrice.
